(19) Europäisches Patentamt / European Patent Office / Office européen des brevets

(11) **EP 1 792 224 B1**

(12) **FASCICULE DE BREVET EUROPEEN**

(45) Date de publication et mention
de la délivrance du brevet:
**07.09.2011 Bulletin 2011/36**

(21) Numéro de dépôt: **05792104.1**

(22) Date de dépôt: **12.07.2005**

(51) Int Cl.:
*G02B 27/01* (2006.01)    *B29D 11/00* (2006.01)

(86) Numéro de dépôt international:
**PCT/FR2005/050574**

(87) Numéro de publication internationale:
**WO 2006/016086 (16.02.2006 Gazette 2006/07)**

(54) **PROCEDE DE FABRICATION D'UNE LENTILLE OPHTALMIQUE DESTINEE A LA REALISATION D'UN AFFICHEUR OPTIQUE**

VERFAHREN ZUR HERSTELLUNG EINER OPHTHALMISCHEN LINSE FÜR DIE HERSTELLUNG EINER OPTISCHEN ANZEIGE

METHOD FOR MAKING AN OPHTHALMIC LENS DESIGNED TO PRODUCE AN OPTICAL DISPLAY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.07.2004 FR 0407902**

(43) Date de publication de la demande:
**06.06.2007 Bulletin 2007/23**

(73) Titulaire: **ESSILOR INTERNATIONAL (Compagnie Générale d'Optique)
94227 Charenton le Pont (FR)**

(72) Inventeurs:
• **MOLITON, Renaud
F-94227 CHARENTON-LE-PONT (FR)**
• **CADO, Hervé
F-94227 CHARENTON-LE-PONT (FR)**
• **MARTIN, Gérard
F-94227 CHARENTON-LE-PONT (FR)**

(74) Mandataire: **Lenne, Laurence et al
Feray Lenne Conseil
Le Centralis
63, avenue du Général Leclerc
92340 Bourg-la-Reine (FR)**

(56) Documents cités:
EP-A- 1 385 023        WO-A-00/79327
FR-A- 2 828 743        US-A1- 2001 033 401
US-A1- 2002 036 751    US-B1- 6 384 982

**Description**

La présente invention concerne un procédé de fabrication d'une lentille ophtalmique destinée à la réalisation d'un afficheur optique grâce à un imageur optique destiné à permettre la projection d'informations, de type images ou multimédia. Est ici appelée « lentille » un système optique qui peut notamment être positionné dans une monture de lunettes.

Il est connu du brevet US 5 886 822 de réaliser une lentille ophtalmique présentant un insert de projection. Un tel insert de projection est constitué d'un imageur optique destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

Cet imageur optique connu se compose d'un prisme de propagation, d'un contre-prisme, d'une lame quart d'onde et d'un miroir de Mangin sphérique. Le miroir de Mangin sphérique est une lentille plan-sphérique pour laquelle la face sphérique a été rendue réfléchissante au moyen d'un traitement aluminisé ou équivalent.

L'imageur comporte également un traitement séparateur de polarisation qui peut être réalisé sous forme d'un dépôt de couches minces, soit sur le prisme de propagation, soit sur le contre-prisme, soit au moyen d'un film collé entre les deux éléments précédemment cités.

L'imageur peut être surmoulé dans une lentille comme décrit dans le document de brevet FR 2 828 743.

De par la propagation des faisceaux optiques parallèlement au plan de la lentille avec réflexion à 45°, un tel insert de projection présente une épaisseur relativement importante, si l'on souhaite une taille apparente de l'image projetée suffisamment grande et acceptable. Ceci est préjudiciable à l'obtention d'une lentille ainsi équipée qui soit également correctrice de la vue. En effet, compte tenu alors des surfaces correctrices courbes sur l'avant et l'arrière de la lentille ophtalmique et mises au point en fonction de cette correction de la vue, l'épaisseur hors tout de la lentille devient inacceptable.

Il est proposé dans le document de brevet US 6 384 982 un afficheur dans lequel des faisceaux optiques émis d'un élément optique d'un système de génération de faisceaux optiques sont introduits par une surface d'entrée et dirigés vers l'oeil du porteur pour permettre la visualisation d'un contenu informationnel, ces faisceaux optiques étant réfléchis une pluralité de fois entre deux faces dites de réflexion entre leur introduction et leur sortie de la lentille, lesdites deux faces de réflexion étant des faces d'un insert optique transparent constitué d'un guide de lumière.

Il est par ailleurs connu du brevet US 6 474 809 de réaliser un afficheur ophtalmique dans lequel un élément holographique réfléchissant est prévu dans la lentille ou entre deux demi-lentilles. Les deux faces de la lentille sont alors réfléchissantes et les faisceaux optiques s'y réfléchissent une pluralité de fois avant d'atteindre l'élément holographique où ils sont dirigés vers l'oeil de l'utilisateur.

Si ces types d'afficheur permettent l'obtention d'une épaisseur de lentille plus réduite, ils posent un problème de compromis entre la fonction d'afficheur et la fonction de correction de la vue. En effet, les faces de la lentille intervenant dans ces deux fonctions, il est par exemple impossible de modifier le rayon de courbure d'une face pour des raisons de correction de la vue sans perturber la fonction d'afficheur. De tels afficheurs ophtalmiques ne peuvent donc être réalisés que sur mesure, s'ils sont destinés également à une correction de la vue de l'utilisateur. En pratique, de tels afficheurs ne peuvent donc être raisonnablement adaptés à une lentille correctrice de la vue.

Par ailleurs, le document de brevet FR 2 828 743 divulgue un procédé de fabrication d'une lentille de correction de la vue comportant une face avant et une face arrière et dans laquelle des faisceaux optiques émis d'un élément optique d'un système de génération de faisceaux optiques sont introduits par une surface d'entrée et dirigés vers l'oeil du porteur pour permettre la visualisation d'un contenu informationnel, ledit insert étant disposé dans ladite lentille lors du moulage de cette dernière dans un moule comportant une première partie de moule destinée au moulage de ladite face avant et une seconde partie de moule destinée au moulage de ladite face arrière et est totalement contenu dans la lentille.

L'invention résout ce problème en proposant un procédé de fabrication d'un afficheur ophtalmique qui puisse être correcteur de la vue de l'utilisateur, tout en pouvant être fabriqué en série de façon fiable et ceci, en découplant les fonctions d'affichage et de correction de la vue.

Pour ce faire, l'invention propose un procédé de fabrication d'une lentille de correction de la vue comportant une face avant et une face arrière et dans laquelle des faisceaux optiques émis d'un élément optique d'un système de génération de faisceaux optiques sont introduits par une surface d'entrée et dirigés vers l'oeil du porteur pour permettre la visualisation d'un contenu informationnel, ledit insert étant disposé dans ladite lentille lors du moulage de cette dernière dans un moule comportant une première partie de moule destinée au moulage de ladite face avant et une seconde partie de moule destinée au moulage de ladite face arrière et est totalement contenu dans la lentille, procédé caractérisé en ce que lesdits faisceaux optiques sont réfléchis une pluralité de fois entre deux faces dites de réflexion entre leur introduction et leur sortie de la lentille, lesdites deux faces de réflexion étant des faces d'un insert optique transparent constitué d'un guide de lumière, ladite surface d'entrée est formée par réalisation d'une cavité moulée dans la lentille et dont elle est le fond et ladite cavité est moulée au moyen d'un plot solidaire de la seconde partie de moule et ledit insert est fixé provisoirement à ce plot avant moulage.

Par lentille est ici entendue une lentille finie prête à être positionnée sur une monture ou lentille non finie ou ébauche de lentille, c'est-à-dire destinée à subir au moins un traitement, par exemple de surfaçage, pour être utilisable.

Une telle ébauche de lentille possède les propriétés d'un semi-fini ophtalmique, à savoir que sa face arrière et/ou sa face avant n'a pas, dans cet état semi-fini, de fonction optique particulière mais est destinée à être surfacée, à savoir ébauchée et .polie, de façon à obtenir un verre ophtalmique fini apportant la prescription du porteur pour la vision environnementale.

Grâce à l'invention, la fonction essentielle de propagation et de mise en forme des faisceaux optiques est assurée par l'insert optique et la fonction essentielle de correction de la vue par la lentille pourvue de ses faces avant et arrière adéquates.

Tous les traitements effectués sur une lentille ophtalmique, par exemple traitement anti reflet, anti salissure ou teinte de type solaire par pigments, peuvent être effectués sans perturber la fonction d'affichage puisqu'il y a découplement des fonctions.

Un insert optique d'épaisseur réduite, de l'ordre de 3 mm, peut être réalisé.

De préférence, ledit plot est disposé sur un bord latéral de ladite seconde partie.

Avantageusement, ladite lentille est obtenue par moulage d'un monomère.

Et de préférence, ledit insert est fixé provisoirement à ce plot avant moulage au moyen d'une couche dudit monomère.

Ladite seconde partie de moule peut comprendre des micro gravures de positionnement et de repérage.

L'invention concerne également une lentille finie prête à être positionnée sur une monture ou une ébauche de lentille, c'est-à-dire destinée à subir au moins un traitement, par exemple de surfaçage, pour être utilisable, obtenue au moyen du procédé tel que précisé ci-dessus.

L'invention concerne enfin un afficheur ophtalmique comportant une telle lentille.

L'invention est décrite ci-après plus en détail à l'aide de figures ne représentant qu'un mode de réalisation préféré de l'invention.

La figure 1 est une vue en coupe d'un afficheur comportant une lentille, selon une première variante de réalisation.
La figure 2 est une vue en coupe d'un afficheur comportant une lentille, selon une seconde variante de réalisation.
La figure 3 est une vue de détail en section d'un afficheur comportant une lentille, selon cette seconde variante de réalisation.
La figure 4 est une vue en coupe d'un afficheur comportant une lentille, selon une autre variante de réalisation.
La figure 5 est un graphe représentant la réflectance spectrale d'un insert isolateur partie d'une lentille, en fonction de la longueur d'onde.
La figure 6 est un graphe représentant la transmission spectrale d'un insert isolateur partie d'une lentille, en fonction de la longueur d'onde.
La figure 7 est une vue en perspective illustrant le procédé de fabrication conforme à l'invention, d'une lentille telle que décrite plus haut.
La figure 8 est une vue en coupe verticale d'une moule utilisé dans le procédé de fabrication conforme à l'invention.
La figure 9 est une vue en coupe longitudinale d'une lentille obtenue selon le procédé de fabrication conforme à l'invention

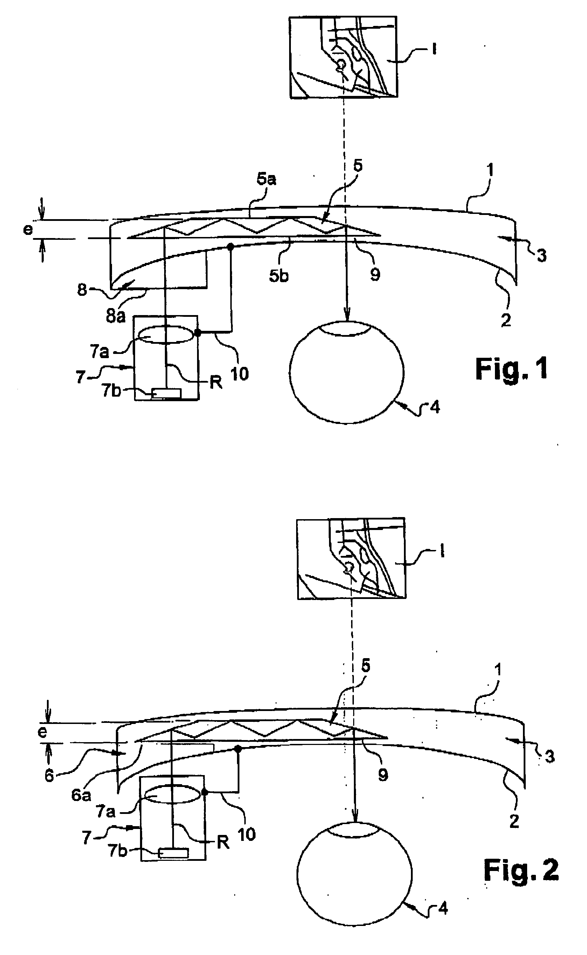

En référence à la figure 1, un signal électronique porteur d'une information est amené à un écran miniature 7b par un câble non représenté. A partir de ce signal, l'écran miniature 7b, éclairé par un projecteur de fond, génère une image pixellisée correspondant à l'information. L'écran 7b est associé à un dispositif optique 7a. Le système de génération de faisceaux de lumière 7 formé de l'écran et du dispositif optique est référencé au moyen d'une interface mécanique 10 par rapport à une lentille 3. Une coque de protection protège en général tout ou partie de l'ensemble.

Le faisceau dé lumière ici schématisé par le trajet du rayon principal R est donc dirigé vers la lentille 3 et est introduit dans cette dernière par l'intermédiaire d'une surface d'entrée 8a associée à la lentille 3. Cette surface d'entrée 8a et le trajet du rayon principal R sont sensiblement perpendiculaires.

Cette surface d'entrée 8a est ici formée par une pièce d'insertion 8 rapportée sur la face arrière 2 de la lentille 3 et fixée par exemple par collage. Cette surface 8a peut par exemple être réalisée par surfaçage de qualité optique afin d'obtenir toutes les caractéristiques nécessaires pour l'obtention d'une bonne image.

Les faisceaux de lumière sont dirigés vers l'oeil 4 du porteur pour permettre la visualisation d'un contenu informationnel I. Pour ce faire, ils sont réfléchis une pluralité de fois entre deux faces de réflexion 5a et 5b entre cette surface d'entrée et leur sortie de la lentille dans une zone dite de sortie 9 de faible épaisseur.

Ces deux faces de réflexion sont des faces d'un insert optique isolateur 5 totalement contenu et noyé dans la lentille 3 et constitué d'un guide de lumière transparent présentant une section trapézoïdale d'angles aigus inférieurs à 45°, parallèlement à la direction de transmission des faisceaux optiques.

La figure 2 ne diffère de la figure 1 que par la réalisation de la surface d'entrée associée à la lentille 1.

Cette surface est ici obtenue par réalisation d'une cavité 6 dans la lentille dont la surface de fond 6a forme cette surface d'entrée des faisceaux de lumière. Cette surface 6a peut être réalisée par moulage, pour obtenir toutes les caractéristiques nécessaires pour l'obtention d'une bonne image. Eventuellement, cette opération de moulage peut être suivie d'une opération de surfaçage de qualité optique

Cette cavité 6 peut être telle que représentée sur la figure 2, réalisée dans l'épaisseur de la lentille et de hauteur inférieure à la hauteur de la lentille.

Elle peut également consister en une facette réalisée en supprimant une épaisseur minimale de la lentille et peut être surfacée sur toute la hauteur de la lentille.

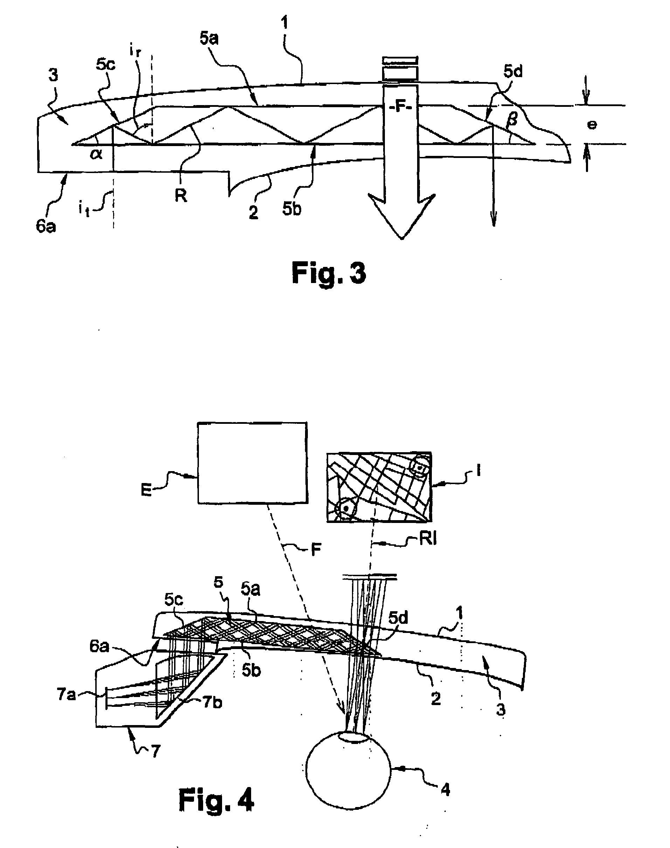

Cette seconde variante de réalisation est représentée plus en détail et en section sur la figure 3 qui a pour but essentiel de décrire l'insert isolateur 5.

Comme déjà indiqué plus haut, grâce à l'invention, les fonctions d'affichage et de correction de la vue sont assurées par la lentille 3.

En ce qui concerne la fonction de propagation et de mise en forme des faisceaux optiques, elle est essentiellement assurée par l'insert optique 5 dans lequel se propagent entièrement les faisceaux de lumière schématisés par la trajectoire du rayon principal R sur la figure 3. Ces faisceaux y subissent une pluralité de réflexions entre deux faces 5a et 5b de l'insert 5. Ceci permet d'obtenir un insert 5 d'épaisseur e minimisé et en conséquence d'avoir une lentille ou verre correcteur également d'épaisseur limitée, tout en obtenant des propriétés de mise en forme des faisceaux de lumière et permettre un agrandissement et un positionnement correct du contenu informationnel I.

En ce qui concerne la fonction de correction de la vue, les faces avant 1 et arrière 2 de la lentille 3 sont usinées de façon en soi connue pour obtenir la correction souhaitée et l'insert 5 est en matière transparente afin de permettre une bonne visibilité de l'environnement au travers de la lentille et de cet insert. De plus sur le plan esthétique, la présence de l'insert dans la lentille n'est pas visible ou pratiquement pas visible.

Plus précisément après mise en forme par le système de génération de faisceaux de lumière 7 grâce à l'écran miniature 7b et à son dispositif optique associé 7a qui peut engendrer une partie de la fonction d'agrandissement de mise en position de l'image informative, le faisceau de lumière passe ensuite au travers de la surface d'entrée 6a qui assure l'optimisation du passage à l'intérieur de la lentille 3.

L'insert optique 5 est constitué d'un guide de lumière en forme de prisme rhomboédrique présentant une section trapézoïdale d'angles aigus $\alpha$ et $\beta$ inférieurs à 45°, parallèlement à la direction de transmission des faisceaux optiques.

Cet insert est constitué d'un matériau transparent, du verre minéral ou une matière plastique, d'indice optique sensiblement égal à celui du matériau constitutif de la lentille sur l'ensemble du spectre visible. Ainsi sont éliminés les effets prismatiques indésirables et est minimisée la visibilité de l'insert optique isolateur.

L'insert comporte :

- les deux faces de réflexion 5a et 5b qui sont planes et parallèles, sur lesquelles se réfléchissent les faisceaux de lumière,
- une face plane 5c réfléchissante et inclinée d'un angle $\alpha$ inférieur à 45° par rapport aux deux faces réfléchissantes précédentes 5a et 5b et servant à replier les faisceaux optiques pour leur propagation dans le guide que constitue l'insert optique isolateur 5,
- une face plane 5d réfléchissante et inclinée d'un angle $\beta$ inférieur à 45° par rapport aux deux faces réfléchissantes précédentes 5a et 5b et servant de combineur pour diriger les faisceaux optiques vers l'oeil de l'utilisateur.

Les faces réfléchissantes peuvent être réalisées par un traitement miroir semi-transparent ou constitué d'aluminium et de dioxyde de silicium, par un traitement multi couches constitué d'un empilement de couches minces déposées par exemple sous vide ou par un élément optique holographique.

Le but d'un traitement multi couches isolateur est de confiner la propagation des faisceaux de lumière de la voie d'imagerie informative à l'intérieur de l'insert optique contenu dans la lentille.

A titre d'exemple de réalisation, la lentille 3 peut être constituée de la matière plastique connue sous la marque « MR6 » commercialisée par Mitsui dont les indices optiques n dans le spectre visible sont approximativement :

à 480nm : n = 1,605185
à 546,1nm : n = 1,59779
à 589,3nm : n = 1,59422
à 643,8nm : n = 1,5899

et pour le matériau de l'insert optique isolateur, on peut utiliser la matière plastique connue sous la marque « STIM8 » commercialisée par Ohara et dont les indices optiques n dans le spectre visible sont approximativement :

à 480nm : n = 1,607111
à 546,1nm : n = 1,59911
à 589,3nm : n = 1,59538
à 643,8nm : n = 1,59173.

Par ailleurs, la face 5b de l'insert proche de la face arrière de la lentille comporte un traitement isolateur assurant la traversée de cette surface 5b à l'entrée du faisceau optique dans l'insert 5 après son passage dans la surface d'entrée 6a et la réflexion de ce même faisceau optique après réflexion sur la face inclinée 5c ou la grande face parallèle 5a.

Le rayon principal étant le rayon lumineux issu du centre de l'écran miniature et se propageant à travers le système pour frapper la pupille de l'oeil en son centre, ce traitement islotateur assure une transmission très élevée des faisceaux optiques pour des angles d'incidence voisins de l'angle d'incidence $i_t$ du rayon principal sur la première face 5b traversée à son entrée dans l'insert optique isolateur. Avantageusement, comme représenté sur la figure 3, cette incidence à l'entrée est sensiblement égale à l'incidence normale soit d'angle $i_t$ nul.

Ce traitement isolateur assure par contre une réflexion très élevée, supérieure à 80%, pour des angles d'incidence voisins de l'angle d'incidence $i_r$ du rayon principal sur cette même surface 5b après sa première réflexion sur la surface réfléchissante inclinée 5c.

Un tel traitement isolateur est transparent pour ne pas perturber la vision de l'utilisateur au travers de la lentille comme symbolisé par la flèche F sur la figure 3, puisqu'il est transparent à proximité de l'incidence normale.

Avantageusement, l'autre grande face de réflexion 5a est constitué d'un même traitement isolateur.

Ce traitement isolateur peut être réalisé au moyen d'un hologramme épais travaillant en réflexion ou au moyen d'un traitement multi couches spécial.

Un exemple d'un tel traitement isolateur multi couches spécial est décrit maintenant en référence à la figure 4.

Cette figure 4 représente un autre mode de réalisation. Les éléments communs aux figures précédentes portent les mêmes références.

Ici, l'élément optique 7b associé à l'écran miniature 7a est une lentille prismatique ayant une de ses surfaces réfléchissant la lumière.

Plusieurs faisceaux de lumière sont schématisés et la direction du rayon principal RI de la voie optique informative pointant sur le centre de l'image virtuelle informative, dite direction de regard informatif est représentée.

Est également schématisée l'image E de l'environnement vue par le porteur. Une flèche F représente les rayons lumineux issus de cet environnement et atteignant l'oeil du porteur en passant au travers de l'insert optique isolateur.

Un traitement multi couches, c'est-à-dire un empilement de couches minces variées de matériaux distincts et donc d'indices optiques différents, est donc déposé à la surface des grandes faces de réflexion 5a et 5b.

On sait que de tels traitements voient leurs propriétés modifiées suivant l'angle d'incidence et la polarisation de la lumière. Il convient d'en tenir compte dans le calcul et l'optimisation de ce traitement.

Globalement, on peut considérer que la propagation des faisceaux lumineux dans le système global et dans l'insert isolateur 5 en particulier se fait à l'intérieur d'un cône dont les angles extrêmes dépendent de la taille apparente de l'image perçue par le porteur ou champ de vision.

Dans le cas d'un système optique comme représenté sur la figure 4 dont le champ de vision est de 10°, pour lequel le combineur 5d et la première surface réfléchissante inclinée 5c sont tous deux constitués par des miroirs aluminisés, la variation de l'angle d'incidence en transmission $i_t$ et de l'angle d'incidence en réflexion $i_r$ est égale sensiblement à la moitié du champ de vision soit sensiblement de 5°.

Dans le cas où le combineur 5d est constitué par un élément optique holographique, cette variation de l'angle d'incidence en transmission $i_t$ et de l'angle d'incidence en réflexion $i_r$ n'est plus exactement égale à la moitié du champ de vision. Toutefois, dans le cas où l'élément optique holographique a une puissance faible par rapport à la lentille 7a du système générateur de faisceaux 7, cette variation est très proche de la moitié du champ de vision.

En tout état de cause, au moyen d'un logiciel de calcul optique comme le logiciel « codeV » d'Optical Research Associates, il peut être déterminé la plage des variations de l'incidence $i_r$ sur les grandes faces de réflexion 5a et 5b quelle que soit la puissance du combineur 5d et quelle que soit la combinaison optique globale utilisée pour la conformation globale de la voie informative.

Pour la suite de l'exemple donné, il est considéré le cas d'un combineur 5d de type miroir et il est également considéré que cette variation de l'angle d'incidence de réflexion $i_r$ est de plus ou moins 5°, ce qui correspond alors à un champ de vision de la lentille informatif de 10°.

Il est de plus considéré que l'écran miniature émet une lumière polarisée rectiligne, selon la polarisation S pour l'incidence sur les grandes faces de réflexion 5a et 5b. La polarisation S est perpendiculaire au plan d'incidence sur ces faces.

Dans le cadre de cette combinaison optique telle que décrite sur la figure 4, les angles $\alpha$ et $\beta$ sont égaux et valent 30° et l'angle d'incidence en réflexion sur les grandes faces de réflexion 5a et 5b est compris entre un angle $i_r$

de 60° plus ou moins 5°, soit un angle $i_r$ compris entre 55° et 65°. Il existe également un nombre de réflexions élevé sur les grandes faces de réflexion 5a et 5b, plus précisément elles sont ici au nombre de cinq.

Dans le cas de notre exemple, l'incidence est normale soit d'angle $i_t$ égal 0°.

La transmission du système est donc égale à :

$$\text{Tsystème } (\lambda) = Rs[5a](i_r)^{E(N/2)} \cdot Rs[5b] \, (i_r)^{\,N-E(N/2)} \cdot T(i_t)^2(\lambda) \cdot Rs[5c] \, (\lambda) \cdot Rs[5d] \, (\lambda)$$

En considérant que les traitements isolateurs sont identiques, on obtient :

$$\text{Tsystème } (\lambda) = Rs[5a](i_r)^N(\lambda) \cdot T(i_t)^2(\lambda) \cdot Rs[5c] \, (\lambda) \cdot Rs[5d] \, (\lambda)$$

où :

- $\lambda$ est la longueur d'onde,
- $Rs[5a](i_r) \, (\lambda)$ est la réflectance spectrale du traitement multicouche 5a pour l'incidence $i_r$ et la polarisation S,
- $T(i_t) \, (\lambda)$ est la transmittance spectrale traitement multicouche 5a pour l'incidence $i_t$,
- $Rs[5c] \, (\lambda)$ est la réflectance spectrale du traitement réfléchissant 5c pour l'incidence correspondante (dans notre cas égale à $\alpha$) et la polarisation S,
- $Rs[5d] \, (\lambda)$ est la réflectance spectrale du combineur 5d pour l'incidence correspondante et la polarisation S.
- N est le nombre total de réflexions sur les faces du guide 5a et 5b.

Les pertes à l'interface lentille - air sont ici négligées. On peut les supposer en effet minimisées par l'application d'un traitement anti-reflet classique dans le domaine de l'optique ophtalmique.

Il est à noter que $Rs[5c] \, (\lambda) \cdot Rs[5d] \, (\lambda)$ est indépendant de la problématique du traitement isolateur.

On peut donc considérer pour la conception de l'empilement de couches minces la formule réduite à maximiser :

$$\text{Tréduit } (\lambda) = Rs[5a](i_r)^N(\lambda) \cdot T(i_t)^2(\lambda).$$

Cela signifie que pour maintenir une bonne transmission, il faut que la réflectance Rs soit élevée, de préférence supérieure à 80-90% sur le domaine visible. On a ainsi $Rs^5$ supérieur à 30%. Au minimum, on choisit Tréduit $(\lambda)$ supérieur à 30% pour toutes les longueurs d'onde du spectre visible, supérieur à 50% pour la majorité d'entre elles, notamment autour du pic de sensibilité de la réponse photopique spectrale de l'oeil, situé autour de 555 nm. Avantageusement, il est le plus élevé possible.

Par ailleurs, la transmission visuelle $\tau v$(isolateur) de la lentille à travers l'insert optique isolateur pour la vision traversante doit être la plus élevée possible. On définit $\tau v$(isolateur) comme étant la résultante de la traversée des deux grandes faces de réflexion 5a et 5b. Sa valeur se calcule à partir de la courbe $T(i_t)^2(\lambda)$ et à partir de l'illuminant D65 et de la sensibilité photopique de l'oeil selon les normes de la CIE (Commission Internationale de l'Eclairage).

Avantageusement, la valeur de $\tau v$(isolateur) est supérieure à 90% sur le domaine visible.

Il convient alors d'optimiser la valeur :

- de la réflexion spectrale S sur le domaine visible compris entre 400 et 700nm, pour les incidences $i_r$ = 55°, 60° et 65°,
- de la transmission spectrale en incidence normale sur le spectre visible,
- du taux de transmission visible $\tau v$ défini selon les normes de la CIE à partir de l'illuminant D65 et de la sensibilité photopique de l'oeil.

Pour ce faire, un empilement de couches minces est calculé pour remplir les critères de performance donnés ci-dessus au moyen de tout logiciel approprié, par exemple le logiciel « Essential MacLeod ».

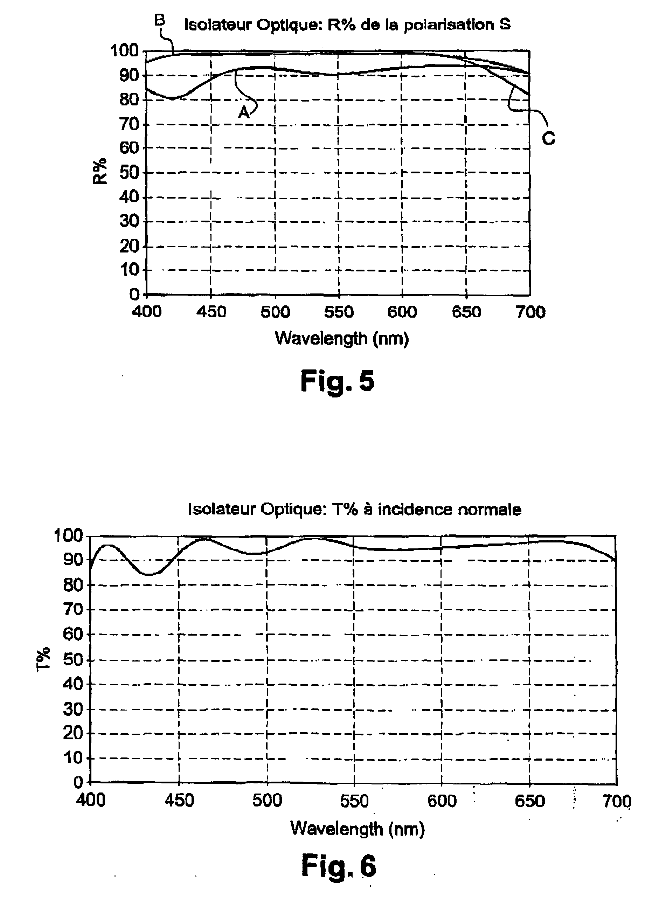

A titre d'exemple avec un empilement de neuf couches tel que précisé dans le tableau ci-dessous, on obtient une réflectance spectrale Rs de l'insert isolateur supérieure à 80% sur le domaine visible et supérieure à 90% à une longueur sensiblement égale à 550nm, comme illustré par le graphe de la figure 5. Sur ce graphe, est représentée la réflectance spectrale Rs pour des angles d'incidence de 55° sur la courbe A, pour des angles d'incidence supérieurs à 60° sur la courbe B et pour des angles d'incidence supérieurs à 65° sur la courbe C.

Avec le même empilement, on obtient une transmission spectrale $T(i_1)\lambda$ conduisant à une valeur de $\tau v$ supérieur à 90% telle qu'illustré sur le graphe de la figure 6.

Dans ce mode de réalisation le « MR8 » est utilisé en tant que matériau constitutif de l'insert optique et de la lentille.

| Couche | Matériau | Indice | Epaisseur (nm) |
|--------|----------|--------|----------------|
| 1 | ZrO2 | 2,00378 | 78,56 |
| 2 | SiO2 | 1,47409 | 146,23 |
| 3 | ZrO2 | 2,00378 | 85,71 |
| 4 | SiO2 | 1,47409 | 170,15 |
| 5 | ZrO2 | 2,00378 | 120,65 |
| 6 | SiO2 | 1,47409 | 298,79 |
| 7 | ZrO2 | 2,00378 | 13,43 |
| 8 | Si02 | 1,47409 | 16,68 |
| 9 | ZrO2 | 2,00378 | 138,39 |

Par ailleurs, grâce à l'invention, la correction de la vue du porteur tout autant pour la vue de l'image informative I que pour l'image de l'environnement E peut être effectuée selon le besoin du porteur.

Sur la figure 4, la vision de l'environnement E par le porteur est corrigée grâce à la lentille ou verre ophtalmique 3 et à la combinaison des faces avant 1 et arrière 2 de cette lentille.

Dans le cas d'un verre simple foyer, la puissance du verre de lunette correspond à la correction du porteur et est égale à la somme de la puissance apportée par la face avant 1 et de la puissance apportée par la face arrière 2. Elle est indépendante de la direction de regard du porteur, c'est-à-dire de la partie du verre à travers laquelle il voit une scène.

On a les équations approximatives suivantes ne tenant pas compte de l'épaisseur de la lentille. Les équations exactes seraient obtenues grâce aux formules de Gullstrand connues de l'homme du métier.

$$P(\text{correction}) = P(\text{face avant 1}) + P(\text{face arrière 2})$$

avec $P(\text{face avant 1}) = (n-1)/R1$
où n est l'indice optique du verre et R1 est le rayon de courbure de la face avant 1 et,

$$P(\text{face arrière 2}) = (1-n)/R2$$

où n est l'indice optique du verre et R2 est le rayon de courbure de la face arrière 2.

La correction de l'image informative i est réalisée en ajustant la mise au point de l'image sur le système générateur de faisceaux de lumière 7. En effet, comme la voie optique informative ne passe pas à travers la face avant 1 du verre de lunette, la correction optique disponible sur la voie d'imagerie informative est seulement égale à la puissance de la face arrière 2 : elle ne correspond donc pas à la correction visuelle prescrite au porteur. Il convient donc de compenser le déficit de correction au moyen d'un changement de mise au point du système générateur 7. Cette compensation est égale à la puissance apportée par la face avant 1.

Dans le cas d'un verre progressif, la correction visuelle apportée par le verre dépend de la direction de regard, c'est-à-dire de la partie du verre à travers laquelle il voit une scène donnée. La puissance de correction peut donc s'écrire de la même façon que ci-dessus, mais localement, pour une direction de regard donnée. Dans le cas de la compensation de puissance à apporter à la voie d'imagerie informative, nous nous intéresserons à la puissance apportée le long de la direction de regard informative RI. Les rayons de courbure à considérer sont ceux situés au voisinage de l'intersection de cette direction de regard RI avec le verre de lunette. Moyennant cette précision au sujet de la localisation, les équations approximatives de définition de la puissance restent identiques :

$$P(\text{correction}) = P(\text{face avant } 1) + P(\text{face arrière } 2)$$

Avec :

$$P(\text{face avant } 1) = (n-1)/R1$$

où n est l'indice optique du verre de lunette et R1 est le rayon de courbure de la face avant 1 au voisinage de la direction de regard RI et,

$$P(\text{face arrière } 2) = (1-n)/R2$$

où n est l'indice optique du verre de lunette et R2 est le rayon de courbure de la face arrière 2 au voisinage de la direction de regard RI.

Par ailleurs, la lentille ophtalmique 3 de par sa fonction de correction influence la proximité à laquelle la voie d'imagerie présente l'image informationnelle I au porteur à cause de la traversée de la face arrière 2 de la lentille.

On appelle proximité idéale Prox(idéale), la proximité en Dioptries D à laquelle on souhaite afficher l'image informative I si le porteur était emmétrope. C'est l'inverse de la distance algébrique en mètres entre l'oeil du porteur emmétrope et l'image virtuelle informative. Le sens algébrique est déterminé par le sens de propagation de la lumière. Si on souhaite que l'image informative apparaisse devant notre porteur, cette distance sera donc négative.

Par exemple, si on souhaite faire apparaître l'image informative I à 1 m devant l'oeil 4 du porteur, comme s'il regardait un écran situé à 1 m devant lui, on obtient une proximité idéale suivante :

$$\text{Prox(idéale)} = -1D.$$

Lorsque le porteur est amétrope, il a besoin de correction visuelle, et notamment au niveau de la puissance.

Cette correction lui est apportée pour la vision de son environnement par la lentille 3 qui possède une puissance égale à la correction dont a besoin le porteur pour la direction de regard considérée RI.

Cette puissance approximative de correction est la suivante :

$$P(\text{correction}) = P(\text{face avant } 1) + P(\text{face arrière } 2).$$

Ainsi, pour que le porteur amétrope puisse voir correctement l'image informative I dans les conditions idéales, il faut que le système constitué par la voie d'imagerie informative et la lentille 3 lui apportent cette image informative à une proximité telle que :

$$P(\text{image informative}) = \text{Prox(idéale)} + P(\text{correction})$$

Or, comme la voie d'imagerie informative ne traverse pas la face avant 1, la puissance apportée par la lentille sur la voie d'imagerie informative n'est que de P(face arrière 2).

Si on note P(imageur) la proximité à laquelle le système optique du système générateur 7 de faisceaux de lumière couplé à l'insert isolateur 5 affiche l'image informationnelle I, il convient pour pouvoir amener l'image dans de bonnes conditions au porteur, que la puissance P(imageur) soit ajustée de telle sorte que :

$$P(\text{imageur}) + P(\text{face arrière } 2) = \text{Prox(idéale)} + P(\text{correction})$$
$$= \text{Prox(idéale)} + P(\text{face1}) + P(\text{face2}).$$

Il faut donc réaliser un ajustement de la mise au point du système générateur de faisceaux de lumière 7 de telle sorte que le système optique couplé à l'insert isolateur 5 affiche l'image informative I avec une proximité égale à :

$$P(\text{imageur}) = \text{Prox}(\text{idéale}) + P(\text{face avant } 1)$$

Pour un porteur de correction donnée et un couple de surfaces avant 1 et arrière 2 réalisant la correction du porteur.

La lentille informative doit donc satisfaire le long de la ligne de regard RI aux deux équations :

$$P(\text{correction}) = P(\text{face avant } 1) + P(\text{face arrière } 2)$$

Et

$$P(\text{imageur}) = \text{Prox}(\text{idéale}) + P(\text{face avant } 1).$$

Dans le cas d'une correction de l'astigmatisme, cette correction est de préférence réalisée sur la face arrière 2 de la lentille, afin de pouvoir corriger simultanément cette amétropie pour la vision de l'environnement et celle de l'image informative.

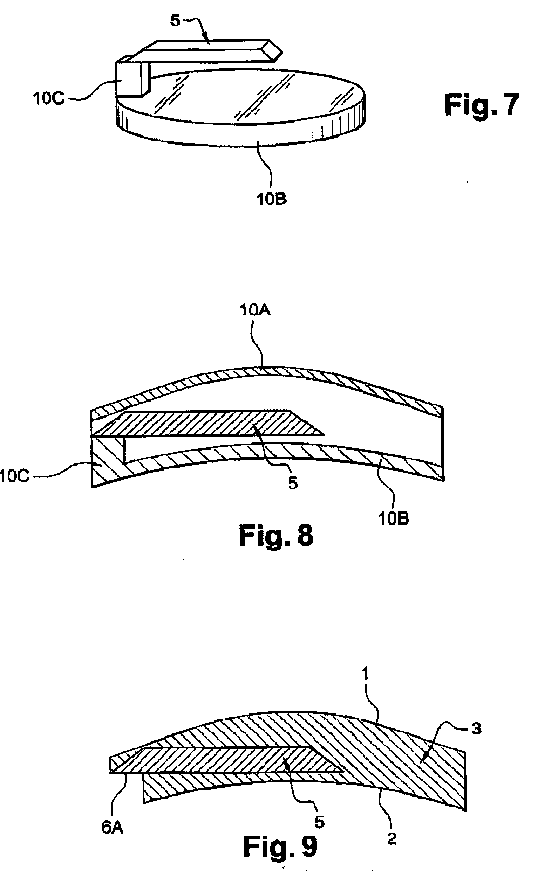

En référence aux figures 7 à 8 est illustré le procédé de fabrication d'une telle lentille conformément à l'invention.

Comme il a déjà été évoqué, l'insert 5 est totalement contenu dans la lentille1. Le moule de fabrication de cette lentille comprend essentiellement deux parties de moule, une première partie de moule 10A destinée au moulage de la face avant 1 de la lentille 3 et une seconde partie de moule 10B destinée au moulage de la face arrière 2 de la lentille.

La surface d'entrée 6a, par laquelle sont introduits les faisceaux optiques émis de l'élément optique du système de génération de faisceaux optiques, est formée par réalisation d'une cavité moulée dans la lentille et dont elle est le fond.

Cette cavité est moulée au moyen d'un plot 10C solidaire de la seconde partie de moule 10B, et de préférence formant une seule pièce avec cette dernière, et l'insert 5 est fixé provisoirement à ce plot avant moulage par collage. Le plot 10C est disposé sur un bord latéral de la seconde partie 10B.

Une fois l'insert fixé au plot, comme illustré sur la figure 8, un monomère est coulé et polymérisé par voie thermique dans le moule et une lentille telle que représentée sur la figure 9 est obtenue.

Très avantageusement, l'insert 5 est fixé provisoirement à ce plot 10C avant moulage au moyen d'une couche du même monomère. De cette sorte la fine couche de monomère permettant l'adhésion de l'insert forme après démoulage une fine couche de revêtement de ce dernier à l'endroit de la surface d'entrée 6a ayant le même indice optique que l'ensemble de la lentille 3.

Les deux parties de moule 10A, 10B peuvent être planes ou courbes, selon que l'on souhaite fabriquer une lentille finie prête à être positionnée sur une monture ou une ébauche de lentille, c'est-à-dire destinée à subir au moins un traitement, par exemple de surfaçage, pour être utilisable.

Ces parties de moule peuvent être en métal, par exemple en acier X15 revêtu d'un traitement TICN pour assurer le désassemblage.

Elles peuvent être en matière organique thermoplastique, de préférence une matière ne présentant pas d'adhésion avec la résine monomère utilisée, par exemple du polypropylène ou du TPX.

Elles peuvent être en matière minérale avec un revêtement constitué par exemple d'un « top coat » ou d'un agent démoulant pouvant être ajouté à la résine polymérisable.

Quel que soit le matériau utilisé, la seconde partie de moule 10B peut comprendre des micro gravures de positionnement et de repérage. Des micro cercles gravés sont transférés sur la lentille obtenue pour permettre le repérage de l'insert 5 dans l'espace et assurer un surfaçage correct. Par ailleurs, le plot 10C est également gravé pour permettre un bon positionnement de l'insert 5 sur sa surface supérieure.

A titre d'exemple, le monomère peut être du MR6. Pour le collage de l'insert 5 sur le plot 10C peut être utilisé une fine couche de MR6UV.

La surface du plot 10C destiné à recevoir l'insert est revêtue de colle, avantageusement du MRMUV et l'insert est positionné sur le plot par un outil adéquat en fonction des gravures réalisées sur le moule. L'insert est appliqué sur le plot et maintenu jusqu'à polymérisation de la colle. Dans le cas d'utilisation de MR6, ce dernier est amorcé avec un photo amorceur particulier qui permet une polymérisation rapide sous rayonnement UV.

**Revendications**

1. Procédé de fabrication d'une lentille de correction de la vue comportant une face avant (1) et une face arrière (2) et dans laquelle des faisceaux optiques émis d'un élément optique d'un système de génération (7) de faisceaux optiques sont introduits par une surface d'entrée (6a, 8a) et dirigés vers l'oeil (4) du porteur pour permettre la visualisation d'un contenu informationnel (I), ledit insert étant disposé dans ladite lentille lors du moulage de cette dernière dans un moule comportant une première partie de moule (10A) destinée au moulage de ladite face avant (1) et une seconde partie de moule (10B) destinée au moulage de ladite face arrière (2) et étant totalement contenu dans la lentille (3), procédé **caractérisé en ce que** lesdits faisceaux optiques sont réfléchis une pluralité de fois entre deux faces dites de réflexion entre leur introduction et leur sortie de la lentille (3), lesdites deux faces de réflexion (5a, 5b) étant des faces d'un insert optique (5) transparent constitué d'un guide de lumière, ladite surface d'entrée (6a) est formée par réalisation d'une cavité moulée dans la lentille et dont elle est le fond et ladite cavité est moulée au moyen d'un plot (10C) solidaire de la seconde partie de moule (10B) et ledit insert (5) est fixé provisoirement à ce plot avant moulage.

2. Procédé selon la revendication 1, **caractérisé en ce que** ledit plot (10C) est disposé sur un bord latéral de ladite seconde partie.

3. Procédé selon l'une des revendications précédentes, **caractérisé en ce que** ladite lentille est obtenue par moulage d'un monomère.

4. Procédé selon les revendications 1 et 3, **caractérisé en ce que** ledit insert (5) est fixé provisoirement à ce plot (10C) avant moulage au moyen d'une couche dudit monomère.

5. Procédé selon l'une des revendications précédentes, **caractérisé en ce que** ladite seconde partie de moule (10B) comprend des micro gravures de positionnement et de repérage.

6. Lentille finie prête à être positionnée sur une monture obtenue au moyen du procédé selon l'une des revendications précédentes.

7. Ebauche de lentille, c'est-à-dire destinée à subir au moins un traitement, par exemple de surfaçage, pour être utilisable, obtenue au moyen du procédé selon l'une des revendications 1 à 5.

8. Afficheur ophtalmique comportant une lentille de correction selon la revendication 6 ou 7.

**Claims**

1. A method for making a vision-correcting lens, comprising a front side (1) and a rear side (2), and wherein optical beams emitted from an optical element of an optical beam generating system (7) are introduced through an input surface (6a, 8a) and directed towards the eye (4) of the wearer for allowing visualization of informational contents (I), said insert an diesem Stift being arranged in said lens when molding the latter in a mold comprising a first mold part (10A) for molding said front side (1) and a second mold part (10B) for molding said rear side (2) and being totally contained within the lens (3), the method being **characterized in that** said optical beams are reflected a plurality of times between two so-called reflecting sides between their introduction into and their exit from the lens (3), said two reflecting sides (5a, 5b) being sides of a transparent optical insert (5) composed of a light guide, said input surface (6a) being formed by making a molded cavity in the lens and of which it is the bottom, and said cavity is molded by means of a pin (10C) integral with the second part of the mold (10B) and said insert (5) is provisionally fastened to this pin before molding.

2. The method according to claim 1, **characterized in that** said pin (10C) is arranged on a side edge of said second part.

3. The method according to any of the preceding claims, **characterized in that** said lens is obtained by molding a monomer.

4. The method according to claims 1 and 3, **characterized in that** said insert (5) is provisionally fastened to this pin (10C) before molding by means of a layer of said monomer.

**5.** The method according to any of the preceding claims, **characterized in that** said second mold part (10B) comprises micro-engravings for positioning and registering.

**6.** A finished lens ready to be positioned on a frame, obtained by means of the method according to any of the preceding claims.

**7.** A lens blank, i.e. meant to undergo at least one process, e.g. facing, in order to be usable, obtained by means of the method according to any of claims 1 to 5.

**8.** An ophthalmic display comprising a correcting lens according to claim 6 or 7.


**Patentansprüche**

**1.** Verfahren zum Herstellen einer Korrekturlinse, umfassend eine Vorderseite (1) und eine Rückseite (2), und wobei optische Strahlen, die von einem optischen Element eines Systems (7) zum Erzeugen optischer Strahlen ausgesendet werden, über eine Eingangsfläche (6a, 8a) eingeführt und auf das Auge (4) des Trägers gerichtet werden, um die Betrachtung eines Informationsinhalts (I) zu ermöglichen, wobei der Einschub in der Linse angeordnet wird, wobei das Einlegeteil in der Linse angeordnet wird beim Formen derselben in einer Form, die einen ersten Formteil (10A), der zum Formen der Vorderseite (1) gedacht ist, und einen zweiten Formteil (10B), der zum Formen der Rückseite (2) gedacht ist, umfasst, und dabei vollständig in der Linse (3) enthalten ist, wobei das Verfahren **dadurch gekennzeichnet ist, dass** die optischen Strahlen mehrmals zwischen zwei so genannten Reflexionsseiten zwischen ihrer Einführung in und ihrem Austritt aus der Linse (3) reflektiert werden, wobei die beiden Reflexionsseiten (5a, 5b) Seiten eines transparenten optischen Einlegeteils (5) sind, das aus einem Lichtleiter besteht, wobei die Eingangsfläche (6a) durch die Ausbildung einer geformten Vertiefung in der Linse gebildet wird und deren Boden sie ist, und die Vertiefung mittels eines Stifts (10C) geformt wird, der mit dem zweiten Formteil (10B) fest verbunden ist, und das Einlegeteil (5) vor dem Formen an diesem Stift vorläufig befestigt wird.

**2.** Verfahren nach Anspruch 1, **dadurch gekennzeichnet, dass** der Stift (10C) auf einem Seitenrand des zweiten Teils angeordnet ist.

**3.** Verfahren nach einem der vorhergehenden Ansprüche, **dadurch gekennzeichnet, dass** die Linse durch Formen eines Monomers erzielt wird.

**4.** Verfahren nach Anspruch 1 bis 3, **dadurch gekennzeichnet, dass** das Einlegeteil (5) vorläufig an diesem Stift (10C) vor dem Formen mittels einer Schicht des Monomers befestigt wird.

**5.** Verfahren nach einem der vorhergehenden Ansprüche, **dadurch gekennzeichnet, dass** der zweite Formteil (10B) Mikrogravuren zum Positionieren und Registerhalten umfasst.

**6.** Fertige Linse, die bereit ist, um in einem Rahmen positioniert zu werden und mittels des Verfahrens nach einem der vorhergehenden Ansprüche erzielt wird.

**7.** Linsenrohling, d.h. dazu gedacht, mindestens eine Bearbeitung zu erfahren, z.B. ein Planschleifen, um verwendbar zu sein, und mittels des Verfahrens nach einem der Ansprüche 1 bis 5 erzielt wird.

**8.** Ophthalmische Anzeige, umfassend eine Korrekturlinse nach Anspruch 6 oder 7.

**Fig. 1**

**Fig. 2**

**Fig. 3**

**Fig. 4**

Isolateur Optique: R% de la polarisation S

**Fig. 5**

Isolateur Optique: T% à incidence normale

**Fig. 6**

**Fig. 7**

**Fig. 8**

**Fig. 9**

**RÉFÉRENCES CITÉES DANS LA DESCRIPTION**

**Documents brevets cités dans la description**

- US 5886822 A
- FR 2828743
- US 6384982 B
- US 6474809 B